(19) Europäisches Patentamt / European Patent Office / Office européen des brevets

(11) **EP 2 417 231 B1**

(12) **EUROPEAN PATENT SPECIFICATION**

(45) Date of publication and mention
of the grant of the patent:
**30.07.2014 Bulletin 2014/31**

(21) Application number: **10711125.4**

(22) Date of filing: **25.03.2010**

(51) Int Cl.:
***C10L 1/233*** *(2006.01)*

(86) International application number:
**PCT/US2010/028596**

(87) International publication number:
**WO 2010/117650 (14.10.2010 Gazette 2010/41)**

(54) **COLD TEMPERATURE STABLE BIOCIDAL COMPOSITION**

KALTE TEMPERATUR-BESTÄNDIGE BIOZIDE ZUSAMMENSETZUNGEN

COMPOSITION BIOCIDE STABLE À BASSE TEMPÉRATURE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **06.04.2009 US 166934 P**

(43) Date of publication of application:
**15.02.2012 Bulletin 2012/07**

(73) Proprietor: **Dow Global Technologies LLC
Midland, MI 48674 (US)**

(72) Inventor: **POHLMAN, John, L.
Skokie
IL 60077 (US)**

(74) Representative: **Beck Greener
Fulwood House
12 Fulwood Place
London WC1V 6HR (GB)**

(56) References cited:
**US-A- 3 860 517**

**Description**

The invention relates to cold temperature stable and synergistic biocidal compositions suitable for use in various aqueous and non aqueous matrices, such as liquid fuels.

N-(2-nitroalkyl) morpholine compounds are a class of biocides that are useful for controlling microorganism growth in a variety of environments, such as industrial cooling water systems, recycle process water systems, oil and gas recovery operations, and in fuels. FUELSAVER™, which is based on a mixture of N-(2-nitrobutyl)morpholine and 2-ethyl-2-nitro-1,3-dimorpholinopropane, is an example of a commercially available N-(2-nitroalkyl) morpholine biocide that is used for preserving fuels.

While N-(2-nitroalkyl) morpholines are effective biocides, many crystallize at temperatures above 0 °C. Such biocides, therefore, are generally unsuitable for cold temperature applications, storage, or transport.

It would be an advance in the art to provide formulations of N-(2-nitroalkyl) morpholines that are cold stable, particularly those that are stable (i.e., do not freeze) at temperatures as low as -20 °C. It would also be an advance to provide formulations that exhibit enhanced activity against a broad spectrum of microorganisms.

US 3 860 517 A relates to certain processes and composition useful for inhibiting the growth of slime in water and, in particular, water used for industrial purposes, for example, in the manufacture of pulp paper, in the manufacture of paper, in cooling water systems and in effluent water treatment. The processes and compositions of US 3 860 517 A are processes or mixtures which show unexpected synergistic activity against microorganisms, including bacteria, fungi and algae, which produce slime in aqueous systems or bodies which are objectionable from either an operational or aesthetic point of view. Specifically, US 3 860 517 A is directed to the use of compositions comprising a combination of N-2-nitrobutyl -morpholine and pentachlorophenol.

BRIEF SUMMARY OF THE INVENTION

In one aspect, the invention provides a biocidal composition that is stable at low temperature and exhibits synergistic behavior. The composition comprises a mixture of N-(2-nitrobutyl)morpholine and 2-ethyl-2-nitro-1,3-dimorpholinopropane and phenoxyethanol.

In another aspect, the invention provides a fuel blend. The fuel blend comprises a liquid fuel and the cold temperature stable biocidal composition described herein.

In a further aspect, the invention provides a method for imparting microorganism resistance to a matrix in need of such resistance. The method comprises including in the matrix an effective amount of the biocidal composition described herein.

DETAILED DESCRIPTION OF THE INVENTION

As noted above, the invention provides cold temperature stable biocidal compositions. In particular, compositions according to the invention have been found to be freeze stable (i.e., do not freeze) to temperatures as low as -20 °C. This occurs even though the individual components of the composition are not themselves freeze stable at the same temperatures.

In addition to cold temperature stability, compositions according to the invention also exhibit improved control of microorganism growth when compared to other non-inventive cold temperature stable formulations.

For the purposes of this specification, the meaning of "microorganism" includes, but is not limited to, bacteria, fungi, algae, and viruses. The words "control" and "controlling" should be broadly construed to include within their meaning, and without being limited thereto, inhibiting the growth or propagation of microorganisms, killing microorganisms, disinfection, and/or preservation against re-growth of microorganisms.

The composition of the invention comprises a mixture of N-(2-nitrobutyl)morpholine and 2-ethyl-2-nitro-1,3-dimorpholinopropane and phenoxyethanol.

Particularly preferred is a mixture of N-(2-nitrobutyl)morpholine and 2-ethyl-2-nitro-1,3-dimorpholinopropane. In this embodiment, it is further preferred that the weight ratio of N-(2-nitrobutyl)morpholine to 2-ethyl-2-nitro-1,3-dimorpholinopropane is between about 20:1 and about 10:1, more preferably between about 18:1 and about 14:1.

The aromatic alcohol used in the compositions of the invention functions as a freeze stabilizer and also as an enhancer of biocidal efficacy. The aromatic alcohol is phenoxyethanol.

The composition of the invention preferably comprises between about 5 and 95 weight percent, more preferably between about 15 and 75 weight percent, even more preferably between about 30 and 55 weight percent, and further preferably between about 38 and 44 weight percent of the N-(2-nitroalkyl) morpholine compound based on the total weight of the biocide and the aromatic alcohol in the composition.

An especially preferred composition according to the invention comprises from about 38 to 44 weight percent of a mixture of N-(2-nitrobutyl)morpholine and 2-ethyl-2-nitro-1,3-dimorpholinopropane and about 62 to 56 weight percent of phenoxyethanol, based on the total weight of the mixture of N-(2-nitrobutyl)morpholine/2-ethyl-2-nitro-1,3-dimorpholinopropane and the phenoxyethanol present in the composition.

The composition may contain other additives including, but not limited to, other aromatic or non-aromatic solvents, glycolic type solvents, and non-aromatic glycol ethers, as well as various inert or byproduct material that may result from the synthesis of the biocide and that are not removed during workup. In general, it is preferred that the total amount of biocide compound and aromatic alcohol comprise at least about 70 weight percent, more preferably at least about 80 weight percent of the composition, based on the compositions total weight.

As noted, more than one N-(2-nitroalkyl) morpholine compound can be combined for use in the invention; in such cases, ratios and concentrations are calculated using the total weight of all N-(2-nitroalkyl) morpholine compounds present.

N-(2-nitroalkyl) morpholine compounds for use in the invention are commercially available or can be readily prepared by those skilled in the art using well known techniques (see e.g., U.S. Patent 3,054,749 and Canadian patent 982475). Aromatic alcohols are also commercially available or can be readily prepared.

The compositions of the invention are useful at controlling microorganism growth in a variety of aqueous and non-aqueous matrices and in matrices that are mixtures of aqueous and non-aqueous components. Examples include, but are not limited to, metalworking fluids, die cast lubricants, mold release agents, paints, paint spray booth wash water, coatings, adhesives, caulks, sealants, mineral slurries, inks, petroleum (crude oil), or liquid fuels such as gasoline, diesel, biodiesel, water-fuel emulsions, ethanol-based fuels, ether-based fuels, diesel oil, fuel oil, or kerosene based fuels. Because of their cold temperature stability, the compositions of the invention are particularly suitable for controlling microorganisms in liquid fuels.

A person of ordinary skill in the art can readily determine, without undue experimentation, the effective amount of the composition that should be used in any particular matrix to provide microorganisms control. By way of illustration, a suitable effective amount (total for the N-(2-nitroalkyl) morpholine compound(s) and the aromatic alcohol) is at least about 25 ppm or at least about 500 ppm, by weight. Typically, the amount is less than about 20,000 ppm or less than about 2500 ppm, by weight.

The components of the composition of the invention can be added to the matrix separately or they can be preblended prior to addition. A person of ordinary skill in the art can readily determine the appropriate method of addition. Preblending is preferred.

The following examples are illustrative of the invention but are not intended to limit its scope. Unless otherwise indicated, ratios, percentages, parts, and the like used herein are by weight.

EXAMPLES

In the Examples below, the following compositions are tested:

Sample A: a comparative composition that contains an 86 weight percent mixture of N-(2-nitrobutyl)morpholine and 2-ethyl-2-nitro-1,3-dimorpholinopropane as the biocidal actives (NBM/ENDM). The ratio of NMB/ENDM is 16.2:1. The balance of the composition are inerts/byproducts created during the synthesis of the biocidal actives. The composition does not contain phenoxyethanol. Available from The Dow Chemical Company as FUELSAVER™ Antimicrobial.

Sample B: an inventive composition that contains about 55 weight percent of phenoxyethanol and about 45 weight percent of Sample A.

Sample C: a comparative composition that is freeze stable and that contains a mixture of about 55 weight percent tripropylene glycol methyl ether as a freeze stabilizer and about 45 weight percent of Sample A. The composition does not contain phenoxyethanol.

Phenoxyethanol (PHE): an aromatic alcohol obtained from The Dow Chemical Company as DOWANOL™ EPh.

Tripropylene Glycol Methyl Ether (TPM): a non-aromatic alcohol that can be used as a freeze stabilizer. It is available from The Dow Chemical Company as DOWANOL™ TPM.

Example 1

Freeze-Thaw Stability Testing

Sample A (comparative composition), Sample B (inventive), and phenoxyethanol (comparative) are placed in a -20 °C freezer for 24 hours, removed and observed for freezing. Samples are thawed completely and then replaced in the freezer for another 24 hour period. This procedure is carried out for five cycles in which the samples are placed in the freezer for five 24 hour periods. Sample size is 5 ml in a clear glass container with a Bakelite screw top. Results are summarized in Table 1.

Table 1.  Freeze Thaw Study: 5 Cycle  in -20 °C Freezer

| Sample | In: Day 1 | Out: Thawed 3 hours | In-Day 2 | Out: Thawed 3 hours | In-Day 3 | Out: Thawed 3 hours |
|---|---|---|---|---|---|---|
| Sample B (inventive) | Not frozen | Not frozen | Not frozen | Not frozen | Not frozen | Not frozen |
| Sample A (comparative) | Frozen | Thawed | Frozen | Thawed | Frozen | Thawed |
| Phenoxyethanol (comparative) | Frozen | Thawed | Frozen | Thawed | Frozen | Thawed |

| Sample | In: Day 4 | Out: Thawed 3 hours | In-Day 5 | Out: Thawed 3 hours |
|---|---|---|---|---|
| Sample B (inventive) | Not frozen | Not frozen | Not frozen | Not frozen |
| Sample A (comparative) | Frozen | Thawed | Frozen | Thawed |
| Phenoxyethanol (comparative) | Frozen | Thawed | Frozen | Thawed |

As can be seen from the data in Table 1, the inventive composition (Sample B) does not freeze even though the individual ingredients, the biocide mixture (Sample A) and the phenoxyethanol, both freeze under the same temperature conditions.

Example 2

Microbial Control Experiments

This example compares the efficacy of compositions of the invention to non-inventive compositions, in diesel fuel, against various microorganisms.

Procedure

Bacteria: *Pseudomonas aeruginosa* (ATCC# 33988), Yeast: *Yarrowia tropicalis* (ATCC# 48138), and Mold: *Hormoconis resinae* ATCC# 20495, are sub-cultured in Bushnell-Haas broth, and used for the inoculum of this example. Bushnell-Haas broth is used as the aqueous phase below the diesel fuel. Testing is carried out for 4 weeks. Microbial survival is measured using the plate count method. Tryptic soy agar is used for Pseudomonas aeruginosa, and Sabouraud dextrose agar with 0.5 ug/ml gentamycin for Yarrowia tropicalis, and bacteriological grade agar 1.5%, with 0.01% potassium tellurite for Hormoconis resinae. Bacteria are incubated at 37 °C for 48 hours, and fungi at 25 °C for 5-7 days.
Testing is carried out in glass bottles with bakelite screw tops. Volumes: 130 ml diesel fuel over 25 ml synthetic water bottom ( Bushnell-Haas Broth ). Tests are mixed weekly by turning the bottle upside down 5 times.
The diesel fuel is obtained from Haltermann Products (Channelview, TX) Diesel fuel, with the following specifications: 2007 Certification Diesel, GMPT-5-019-; Product Number: HF 582b; Product Code: 20582b.
Table 2 shows results for "Sample B" , a composition according to the invention. Table 3 shows results for "Sample C," a comparative composition that is freeze stable. Table 4 shows results for phenoxyethanol which is a component in Sample B, but is not freeze stable by itself. Table 5 is a summary of the lowest dosage required to reduce the concentration of viable microorganisms to a <10 CFU/mL level for Samples B, C, and phenoxyethanol.

Table 2. Biocidal Efficacy: Inventive Composition Sample B

| | Day | Bacteria | Yeast | Mold |
|---|---|---|---|---|
| Control (no biocide) | 30 | 4.3E8 | 8.3E7 | 6.7E6 |
| 500ppm | 30 | 8.0E2 | 5.6E2 | 2.6E3 |
| 750ppm | 30 | 2.8E2 | 1.8E2 | 7.0E2 |

(continued)

|  | Day | Bacteria | Yeast | Mold |
|---|---|---|---|---|
| 1000ppm | 30 | <10 | <10 | 3.8E2 |
| 1500ppm | 30 | <10 | <10 | <10 |
| 2000ppm | 30 | <10 | <10 | <10 |
| 2500ppm | 30 | <10 | <10 | <10 |
| Day 0: Bacteria 8.7E7 cfu/ml; Yeast 2.3E7 cfu/ml; Mold 4.6E6 cfu/ml | | | | |

Table 3. Biocidal Efficacy: Comparative Composition Sample C

|  | Day | Bacteria | Yeast | Mold |
|---|---|---|---|---|
| Control (no biocide) | 30 | 4.3E8 | 8.3E7 | 6.7E6 |
| 500ppm | 30 | 9.0E3 | 1.3E4 | 6.8E4 |
| 750ppm | 30 | 7.8E3 | 5.6E3 | 1.1E4 |
| 1000ppm | 30 | 1.1E3 | 8.4E2 | 8.0E3 |
| 1500ppm, | 30 | 4.0E2 | 2.8E2 | 3.9E3 |
| 2000ppm | 30 | <10 | 6.0E1 | 7.0E2 |
| 2500ppm | 30 | <10 | <10 | <10 |
| Day 0: Bacteria 8.7E7 cfu/ml; Yeast 2.3E7 cfu/ml; Mold 4.6E6 cfu/ml | | | | |

Table 4. Biocidal Efficacy: Phenoxyethanol

|  | Day | Bacteria | Yeast | Mold |
|---|---|---|---|---|
| Control (not biocide) | 30 | 4.3E8 | 8.3E7 | 6.7E6 |
| 500ppm, | 30 | 4.7E6 | 2.0E6 | 7.3E5 |
| 750ppm | 30 | 1.3E6 | 7.2E5 | 6.7E5 |
| 1000ppm | 30 | 4.8E5 | 1.8E5 | 5.6E5 |
| 1500ppm, | 30 | 6.0E4 | 7.3E4 | 9.0E4 |
| 2000ppm | 30 | 1.7E4 | 5.5E4 | 7.8E4 |
| 2500ppm | 30 | 9.6E3 | 2.3E4 | 5.5E4 |
| Day 0: Bacteria 8.7E7 cfu/ml; Yeast 2.3E7 cfu/ml; Mold 4.6E6 cfu/ml | | | | |

Table 5. Lowest dosage required to reduce the concentration of viable microorganism to <10 CFU/mL level (ppm).

|  | ppm of NMB/ENDM in Sample B | ppm of PHE in Sample B | ppm of NMB/ENDM in Sample C | ppm PHE |
|---|---|---|---|---|
| Bacteria | 387 | 550 | 774 | >2500 |
| Yeast | 387 | 550 | 968 | >2500 |
| Mold | 581 | 825 | 968 | >2500 |

As can be seen from the data, the inventive composition (Sample B) provides significantly improved microbial control relative to the other low temperature stable formulation (Sample C), as well as relative to phenoxyethanol which is not freeze stable nor very effective as a microbial control agent.

Example 3

Synergy of Inventive Compositions

Sample A and Sample C were re-tested at the same biocidal active concentrations using the test method described in Example 2, except the test was carried out for 7 days and the microbial survival was measured at 24 hour and at 7 days. The results are summarized in Table 6.

Table 6. Comparison of the efficacy of Sample A and Sample C at equivalent NMB/ENDM active concentrations

| Contac t time | NMB/ENDM Concentration (ppm) | Microbial growth after biocide treatments at 24h and 7 days | | | |
| | | Bacteria | | Yeast | |
| | | *Sample A* | *Sample C* | *Sample A* | *Sample C* |
| 24 hours | 0 (Control) | 2.0E7 | 2.0E7 | 1.2E5 | 1.2E5 |
| | 194 | 6.0E4 | <10 | 1.1E4 | 2.7E3 |
| | 387 | <10 | <10 | <10 | <10 |
| | 774 | <10 | <10 | <10 | <10 |
| 7 days | 0 (Control) | 1.1E9 | 1.1E9 | 4.0E5 | 4.0E5 |
| | 194 | <10 | <10 | <10 | <10 |
| | 387 | <10 | <10 | <10 | <10 |
| | 774 | <10 | <10 | <10 | <10 |
| Day 0: Bacteria 4.0E6 cfu/ml; Yeast 6.1E6 cfu/ml; Mold 4.0E7 cfu/ml | | | | | |

As shown in Table 6, at equivalent active concentrations, Sample A had generally lower efficacy than Sample C.
Because Sample A is generally less effective than Sample C at the same active concentrations, the data results from Table 5 are used to determine the concentrations of NMB/ENDM in Sample C that are required to achieve a <10CFU/mL level, to estimate the synergy index between NMB/ENDM and phenoxyethanol. Based on the Synergy Index (SI) calculation equation below, the estimated synergy indices for NMB/ENDM and phenoxyethanol are provided in Table 7.

$$\text{Synergy Index} = C_a/C_A + C_b/C_B$$

Ca: Concentration of NMB/ENDM in Sample B required to reduce the concentration of viable microorganism to <10 CFU/ml level
CA: Concentration of NMB/ENDM required to reduce the concentration of viable microorganism to <10 CFU/ml level when used alone
Cb: Concentration of PHE in Sample B required to reduce the concentration of viable microorganism to <10 CFU/ml level
CB: Concentration of PHE required to reduce the concentration of viable microorganism to <10 CFU/ml level when used alone
<1: synergy
Synergy Index =1: additivity
>1: antagonism

Table 7. Estimated synergy indices between NMB/ENDM and phenoxyethanol

|  | ppm of NMB/ENDM in Sample B (Ca) | ppm of PHE in Sample B (Cb) | ppm of NMB/ENDM (CA) | PHE (CB) | Synergy Index |
|---|---|---|---|---|---|
| Bacteria | 387 | 550 | >774 | >2500 | <0.72 |
| Yeast | 387 | 550 | >968 | >2500 | <0.62 |
| Mold | 581 | 825 | >968 | >2500 | <0.93 |

The results in Table 7 illustrate that there is a synergistic effect between NMB/ENDM and phenoxyethanol.

**Claims**

1. A cold temperature stable biocidal composition comprising:
a mixture of N-(2-nitrobutyl)morpholine and 2-ethyl-2-nitro-1,3-dimorpholinopropane and phenoxyethanol.

2. A blend comprising a liquid fuel and the biocidal composition of Claim 1.

3. A blend according to Claim 2 wherein the liquid fuel is gasoline, diesel, biodiesel, a water-fuel emulsion, an ethanol-based fuel, an ether-based fuel, diesel oil, fuel oil, or kerosene based fuel.

4. A method for providing microorganism resistance to a matrix susceptible to growth of microorganisms, the method comprising including in the matrix an effective amount of the biocidal composition of Claim 1.

5. The method of Claim 4 wherein the matrix is aqueous, non-aqueous, or a mixture of aqueous and non-aqueous.

6. The method of Claim 5 wherein the matrix is a metalworking fluid, a die cast lubricant, a mold release agent, a paint, paint spray booth wash water, a coating, an adhesive, a caulk, a sealant, a mineral slurry, an ink, petroleum (crude oil), or a liquid fuel.

7. The method of Claim 6 wherein the liquid fuel is gasoline, diesel, biodiesel, a water-fuel emulsion, an ethanol-based fuel, an ether-based fuel, diesel oil, fuel oil, or kerosene based fuel.

**Patentansprüche**

1. Eine kältestabile biozide Zusammensetzung, die Folgendes beinhaltet:

eine Mischung aus N-(2-Nitrobutyl)morpholin und 2-Ethyl-2-nitro-1,3-dimorpholinpropan und Phenoxyethanol.

2. Ein Gemisch, beinhaltend einen flüssigen Kraftstoff und die biozide Zusammensetzung gemäß Anspruch 1.

3. Gemisch gemäß Anspruch 2, wobei der flüssige Kraftstoff Benzin, Diesel, Biodiesel, eine Wasser-Kraftstoff-Emulsion, ein auf Ethanol basierender Kraftstoff, ein auf Ether basierender Kraftstoff, Dieselöl, Heizöl oder auf Kerosin basierender Kraftstoff ist.

4. Ein Verfahren zum Bereitstellen von Mikroorganismusresistenz für eine Matrix, die für Mikrooganismuswachstum anfällig ist, wobei das Verfahren das Einschließen einer wirksamen Menge der bioziden Zusammensetzung gemäß Anspruch 1 in der Matrix beinhaltet.

5. Verfahren gemäß Anspruch 4, wobei die Matrix wässrig, nicht wässrig oder eine Mischung aus wässrig und nicht wässrig ist.

6. Verfahren gemäß Anspruch 5, wobei die Matrix ein Metallbearbeitungsfluid, ein Spritzgussschmiermittel, ein Formtrennmittel, eine Farbe, ein Farbspritzkabinenwaschwasser, eine Beschichtung, ein Haftmittel, eine Dichtungsmasse, ein Dichtungsmaterial, eine Mineralschlämme, eine Tinte, Erdöl (Rohöl) oder ein flüssiger Kraftstoff ist.

**7.** Verfahren gemäß Anspruch 6, wobei der flüssige Kraftstoff Benzin, Diesel, Biodiesel, eine Wasser-Kraftstoff-Emulsion, ein auf Ethanol basierender Kraftstoff, ein auf Ether basierender Kraftstoff, Dieselöl, Heizöl oder auf Kerosin basierender Kraftstoff ist.

**Revendications**

**1.** Une composition biocide stable à basse température comprenant :

un mélange de N-(2-nitrobutyl)morpholine, de 2-éthyl-2-nitro-1,3-dimorpholinopropane et de phénoxyéthanol.

**2.** Un mélange homogène comprenant un combustible liquide et la composition biocide de la revendication 1.

**3.** Un mélange homogène selon la revendication 2 dans lequel le combustible liquide est de l'essence, du diesel, du biodiesel, une émulsion eau-combustible, un combustible à base d'éthanol, un combustible à base d'éther, un carburant diesel, un fioul, ou un combustible à base de kérosène.

**4.** Un procédé pour procurer une résistance aux microorganismes à une matrice sensible à la croissance de microorganismes, le procédé comprenant le fait d'inclure dans la matrice une quantité efficace de la composition biocide de la revendication 1.

**5.** Le procédé de la revendication 4 dans lequel la matrice est aqueuse, non aqueuse, ou un mélange d'aqueux et de non aqueux.

**6.** Le procédé de la revendication 5 dans lequel la matrice est un fluide de transformation des métaux, un lubrifiant pour moulage sous pression, un agent de démoulage, une peinture, une eau de lavage de cabine de peinture au pistolet, un revêtement, un adhésif, une pâte à calfeutrer, un matériau d'étanchéité, une boue minérale, une encre, du pétrole (huile brute), ou un combustible liquide.

**7.** Le procédé de la revendication 6 dans lequel le combustible liquide est de l'essence, du diesel, du biodiesel, une émulsion eau-combustible, un combustible à base d'éthanol, un combustible à base d'éther, un carburant diesel, un fioul, ou un combustible à base de kérosène.

**EP 2 417 231 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3860517 A
- US 3054749 A
- CA 982475